# EUROPEAN PATENT APPLICATION

(11) **EP 3 970 818 A1**
(43) Date of publication of application: **23.03.2022**
(21) Application number: 20196815.3
(22) Date of filing: 18.09.2020
(51) Int. Cl.: A63F 13/52, A63F 13/55, G06T 15/50

(54) **METHOD FOR ADJUSTING SKIN TONE OF AVATAR AND AVATAR SKIN TONE ADJUSTING SYSTEM**

(71) Applicant: XRSpace CO., LTD., Taoyuan City 330 (TW)
(72) Inventor: HU, Chih-Wei, 802 Kaohsiung City (TW)
(74) Representative: Emde, Eric

(57) **Abstract**

A method for adjusting skin tone of an avatar and an avatar skin tone adjusting system are provided. The method includes: obtaining an incident angle of a virtual environment light and a skin thickness value corresponding to a first skin fragment of the skin fragments; determining a skin tone adjusting parameter based on the incident angle of the virtual environment light and the skin thickness value corresponding to the first skin fragment of the avatar; and adjusting a skin tone of the first skin fragment based on a default skin tone of the first skin fragment and the skin tone adjusting parameter of the first skin fragment before rendering the avatar.

## Description

### BACKGROUND

### 1. Field of the Disclosure

The present disclosure generally relates to an avatar optimizing mechanism, in particular, to a method for adjusting skin tone of an avatar and an avatar skin tone adjusting system.

### 2. Description of Related Art

Technologies for simulating senses, perception and/or environment, such as virtual reality (VR), augmented reality (AR), mixed reality (MR) and extended reality (XR), are popular nowadays. The aforementioned technologies can be applied in multiple fields, such as gaming, military training, healthcare, remote working, etc.

In the virtual environments of the above technologies, there may exist many avatars for representing users or other non-player characters. However, the skin tones of the avatars in these virtual environments are usually unrealistic and/or unnatural (e.g., plastic-like). Specifically, for a real human, the skin tone should be a little bit of pink for having blood flowing under human skins. If the skin tones of the avatars are determined without considering the aforementioned situation, the visual effect provided by the avatars may be less satisfying.

### SUMMARY

Accordingly, the present disclosure is directed to a method for adjusting skin tone of an avatar and an avatar skin tone adjusting system, which may be used for solving the above technical problem.

The present disclosure provides a method for adjusting skin tone of an avatar, including: obtaining an incident angle of a virtual environment light and a skin thickness value corresponding to a first skin fragment of the skin fragments; determining a skin tone adjusting parameter based on the incident angle of the virtual environment light and the skin thickness value corresponding to the first skin fragment of the avatar; and adjusting a skin tone of the first skin fragment based on a default skin tone of the first skin fragment and the skin tone adjusting parameter of the first skin fragment before rendering the avatar.

The disclosure provides an avatar skin tone adjusting system including a memory and a processor. The memory stores a program code. The processor is coupled to the memory, and loading the program code to perform: obtaining an incident angle of a virtual environment light and a skin thickness value corresponding to a first skin fragment of the skin fragments; determining a skin tone adjusting parameter based on the incident angle of the virtual environment light and the skin thickness value corresponding to the first skin fragment of the avatar; and adjusting a skin tone of the first skin fragment based on a default skin tone of the first skin fragment and the skin tone adjusting parameter of the first skin fragment before rendering the avatar.

### BRIEF DESCRIPTION OF THE DRAWINGS

The accompanying drawings are included to provide a further understanding of the invention, and are incorporated in and constitute a part of this specification. The drawings illustrate embodiments of the invention and, together with the description, serve to explain the principles of the invention.
FIG. 1 is a block diagram illustrating an avatar skin tone adjusting system according to one of the exemplary embodiments of the disclosure.
FIG. 2 shows a flow chart of the avatar skin tone adjusting method according to an embodiment of the disclosure.
FIG. 3 shows different skin tones for the same avatar with respect to different incident angles of virtual environment light at different timings according to embodiments of the disclosure.
FIG. 4 shows the visual effect improvement of the appearance of the avatar according to embodiments of the disclosure.

### DESCRIPTION OF THE EMBODIMENTS

Reference will now be made in detail to the present preferred embodiments of the disclosure, examples of which are illustrated in the accompanying drawings. Wherever possible, the same reference numbers are used in the drawings and the description to refer to the same or like parts.

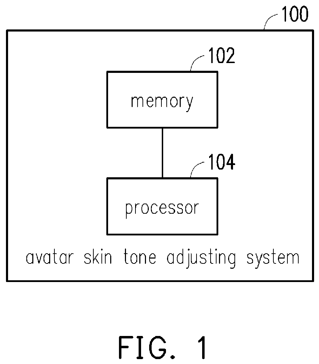

FIG. 1 is a block diagram illustrating an avatar skin tone adjusting system according to one of the exemplary embodiments of the disclosure. Referring to FIG. 1, the avatar skin tone adjusting system 100 includes, but not limited to, a memory 102 and a processor 104. The avatar skin tone adjusting system 100 is adapted for VR, AR, MR, XR or other reality simulation related technology.

The memory 102 may be any type of a fixed or movable random-access memory (RAM), a read-only memory (ROM), a flash memory, a similar device or a combination of the above devices. The memory 102 records program codes, device configurations, buffer data or permanent data (such as user data, training data, emotion classifier, emotion decision, emotional configuration, weighted relation, linear relation, emotion groups), and these data would be introduced later.

The processor 104 is coupled to the memory 102. The processor 104 is configured to load the program codes stored in the memory 102, to perform a procedure of the exemplary embodiment of the disclosure.

In some embodiments, the processor 104 may be a central processing unit (CPU), a microprocessor, a microcontroller, a digital signal processing (DSP) chip, a field-programmable gate array (FPGA). The functions of the processor 104 may also be implemented by an independent electronic device or an integrated circuit (IC), and operations of the processor 104 may also be implemented by software.

In the embodiments of the disclosure, the processor 104 may access the modules stored in the memory 102 to implement the avatar skin tone adjusting method provided in the disclosure, which would be further discussed in the following.

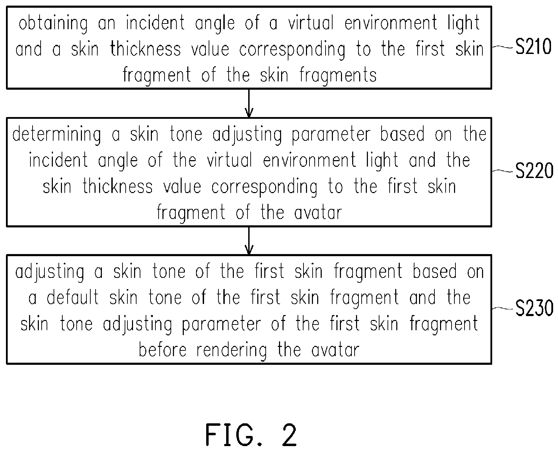

Referring to FIG. 2, which shows a flow chart of the avatar skin tone adjusting method according to an embodiment of the disclosure. The method of this embodiment may be executed by the avatar skin tone adjusting system 100 in FIG. 1, and the details of each step in FIG. 2 will be described below with the components shown in FIG. 1.

In the embodiments of the disclosure, the method in FIG. 2 may be applied to each skin fragment of each avatar in the virtual environments (e.g., VR world). Therefore, the following discussions related to the steps of FIG. 2 would be provided based on one skin fragment (referred to as a first skin fragment) of one avatar, but the disclosure is not limited thereto.

In step S210, the processor 104 may obtain an incident angle of a virtual environment light and a skin thickness value corresponding to the first skin fragment of the skin fragments. In some embodiments of the disclosure, the virtual environment light may be emitted from various virtual light sources in the virtual environment, such as the sun light, bulb light, or the combination thereof, but the disclosure is not limited thereto.

In one embodiment, the incident angle of the virtual environment light to the first skin fragment may be directly retrieved from the 3D engine that constructs the virtual environment, but the disclosure is not limited thereto.

In some embodiments of the present disclosure, the avatar may be designed with a skin grayscale map used for representing the skin thickness of each skin fragment on the avatar. Specifically, the skin grayscale map may include multiple grayscale regions corresponding to the skin fragments on the avatar, and the grayscale value of each grayscale region characterizes the skin thickness of the corresponding skin fragment. In one embodiment, the grayscale value of a certain grayscale region is negatively related to the skin thickness of the corresponding skin fragment. That is, the higher the grayscale value of the grayscale region is, the thinner the skin thickness of the corresponding skin fragment is, and vice versa, but the disclosure is not limited thereto.

Therefore, for the first skin fragment, the processor 104 may also obtain the corresponding grayscale value for characterizing the skin thickness corresponding the first skin fragment.

In step S220, the processor 104 may determine a skin tone adjusting parameter based on the incident angle of the virtual environment light and the skin thickness value corresponding to the first skin fragment of the avatar. In one embodiment, the processor 104 may map the incident angle as a light angle parameter. In some embodiments, the light angle parameter may have a maximum value in response to the incident angle being 45 degrees. In other embodiments, the light angle parameter may have a minimum value in response to the incident angle being 0 or 90 degrees, which may be respectively understood as where the virtual environment light being unreachable and maximally reflected, but the disclosure is not limited thereto.

Next, the processor 104 may obtain a predetermined blood color and a blood color correction parameter. In some embodiments, the predetermined blood color may be red or other blood-like color based on the requirements of the designer, and the blood color correction parameter may be determined as a value that corrects the predetermined blood color to be more natural, but the disclosure is not limited thereto.

Afterwards, the processor 104 may determine the skin tone adjusting parameter based on the grayscale value, the light angle parameter, the predetermined blood color, and the blood color correction parameter. In one embodiment, the skin tone adjusting parameter may be determined to be a multiplication value of the grayscale value corresponding to the skin thickness value, the light angle parameter, the predetermined blood color, and the blood color correction parameter. In other embodiments, the skin tone adjusting parameter may be determined to be as any combination of the grayscale value corresponding to the skin thickness value, the light angle parameter, the predetermined blood color, and the blood color correction parameter based on the requirements of the designer, but the disclosure is not limited thereto.

In step S230, the processor 104 may adjust a skin tone of the first skin fragment based on a default skin tone of the first skin fragment and the skin tone adjusting parameter of the first skin fragment before rendering the avatar. In one embodiment, the default skin tone of the first skin fragment may be understood as the original skin tone of the first skin fragment. The default skin tone of the first skin fragment may be predetermined based on various conditions, such as the race of the avatar, the used light model corresponding to the first skin fragment (which relates to the light strength and/or the material of the first skin fragment), the makeup information on the first skin fragment, but the disclosure is not limited thereto.

In some embodiments, the default skin tone of the first skin fragment may include N first color components (e.g., R, G, B), and the skin tone adjusting parameter may include N second color components respectively corresponding to the first color components. In this case, the processor 104 may add each of the first color components of the default skin tone to the corresponding second color component of the skin tone adjusting parameter to obtain the adjusted skin tone of the first skin fragment. For example, assuming that the values of the first color components are (R1, G1, B1)=(10, 20, 30) and the values of the second color components are (R2, G2, B2)=(50, 0, 0), the processor 104 may accordingly obtain the adjusted skin tone as (Ro, Go, Bo)=(60, 20, 30). In other embodiments, the adjusted skin tone of the first skin fragment may be characterized as any (linear) combination of the first color components and the second color components, but the disclosure is not limited thereto.

In other embodiments, the processor 104 may further render the first skin fragment with the adjusted skin tone. That is, the first skin fragment may be adjusted to appear in the adjusted skin tone. Accordingly, the first skin fragment may be more natural and less plastic-like, such that the first skin fragment may provide a better visual effect.

In the embodiments of the disclosure, the skin tone adjusting parameter may be understood as a blood color parameter used to make the first skin fragment with the adjusted skin tone look pinker, which may correspondingly make the first skin fragment look more natural and realistic (e.g., less plastic-like). Moreover, since the skin tone adjusting parameter and the adjusted skin tone may be obtained via calculations with low computation complexity, the method of the disclosure may achieve a better visual effect with high efficiency.

For each skin fragment on the avatar, the corresponding skin tone may be improved based on the above teachings, such that the appearance of the avatar would be more human-like, and the user experience may be accordingly improved.

In brief, the embodiments of the disclosure may be understood as providing a mechanism for improving the visual effect provided by the first skin fragment of the avatar by incorporating the skin tone adjusting parameter (i.e., the blood color parameter). Since the skin tone adjusting parameter is determined based on the corresponding grayscale value, the light angle parameter, the predetermined blood color, and the blood color correction parameter, the skin tone adjusting parameter may be used to correct the default skin tone of the first skin fragment as the adjusted skin tone, which provides a more natural and less plastic-like visual effect. Accordingly, the appearance of the avatar would be more human-like, such that the user experience may be improved.

In other embodiments, the visual effect provided by the first skin fragment may be further improved based on the following discussions.

For example, in a first embodiment, the processor 104 may obtain an ambient occlusion (AO) value corresponding to the first skin fragment from, for example, the 3D engine of the virtual environment. Next, the processor 104 may modify the adjusted skin tone of the first skin fragment based on the ambient occlusion value of the first skin fragment before rendering the avatar. In one embodiment, the processor 104 may multiply the adjusted skin tone with the AO value to modify the adjusted skin tone, but the disclosure is not limited thereto. Afterwards, the processor 104 may adjust the first skin fragment as the modified skin tone. That is, the first skin fragment may be adjusted to appear in the modified skin tone to provide a better visual effect.

In a second embodiment, the processor 104 may obtain a self-luminous value corresponding to the first skin fragment from, for example, the 3D engine of the virtual environment. Next, the processor 104 may modify the adjusted skin tone of the first skin fragment based on the self-luminous value of the first skin fragment before rendering the avatar. In one embodiment, the processor 104 may add the self-luminous value to the adjusted skin tone to modify the adjusted skin tone and adjust the first skin fragment as the modified skin tone. That is, the first skin fragment may be adjusted to appear in the modified skin tone to provide a better visual effect.

In a third embodiment, the processor 104 may obtain an AO value corresponding to the first skin fragment and a self-luminous value corresponding to the first skin fragment. Next, the processor 104 may modify the adjusted skin tone of the first skin fragment based on the ambient occlusion value and the self-luminous value of the first skin fragment before rendering the avatar. In one embodiment, the processor 104 may add the self-luminous value to a multiplication of the adjusted skin tone and the ambient occlusion value to obtain the modified skin tone. In other embodiments, the modified skin tone may be obtained by combining the adjusted skin tone, the ambient occlusion value and the self-luminous value based on the requirements of the designer, but the disclosure is not limited thereto. Afterwards, the processor 104 may adjust the first skin fragment as the modified skin tone. That is, the first skin fragment may be adjusted to appear in the modified skin tone to provide a better visual effect.

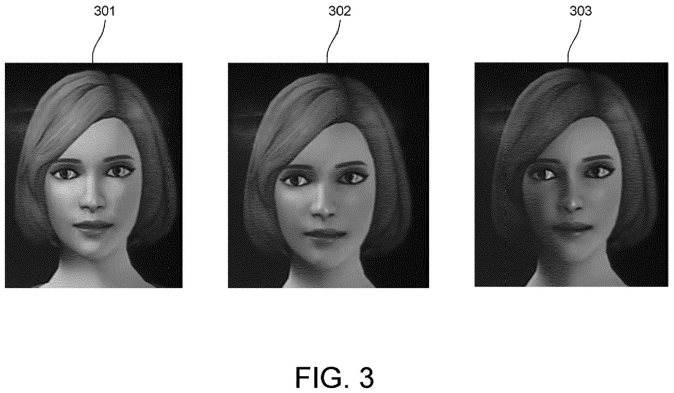

Referring to FIG. 3, which shows different skin tones for the same avatar with respect to different incident angles of virtual environment light at different timings according to embodiments of the disclosure. Specifically, the appearance of the avatar 301 corresponds to the situation where the virtual environment light comes from the upper right direction of the avatar 301, the appearance of the avatar 302 corresponds to the situation where the virtual environment light comes from the upper front direction of the avatar 302, and the appearance of the avatar 303 corresponds to the situation where the virtual environment light comes from the upper left direction of the avatar 303. As could be observed in FIG. 3, along with the varying incident angle of virtual environment light, the appearances of the avatars 301-303 may consistently provide satisfying visual effect due to the skin tone of each skin fragments on the avatars 301-303 has been improved based on the corresponding skin tone adjusting parameter.

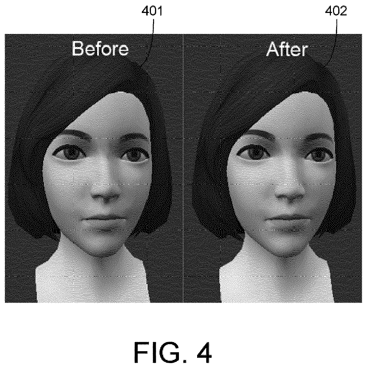

Referring to FIG. 4, which shows the visual effect improvement of the appearance of the avatar according to embodiments of the disclosure. In FIG. 4, the avatar 401 may be understood as appearing with the default skin tone of each skin fragment of the avatar 401. On the other hand, the avatar 402 may be understood as appearing with the adjusted skin tone of each skin fragment of the avatar 402. As could be observed in FIG. 4, the visual effect provided by the avatar 402 is more natural and human-like than the avatar 401, such that the user experience may be accordingly improved.

In summary, the embodiments of the disclosure provide a mechanism for improving the visual effect provided by the first skin fragment of the avatar by incorporating the skin tone adjusting parameter (i.e., the blood color parameter). Since the skin tone adjusting parameter is determined based on the grayscale value, the light angle parameter, the predetermined blood color, and the blood color correction parameter, the skin tone adjusting parameter may be used to correct the default skin tone of the first skin fragment as the adjusted skin tone, which provides a more natural and less plastic-like visual effect. Accordingly, the appearance of the avatar would be more human-like, such that the user experience may be improved.

## Claims

1. A method for adjusting skin tone of an avatar (301, 302, 303, 402), wherein the avatar (301, 302, 303, 402) comprises a plurality of skin fragments, and the method comprises:
obtaining (S210) an incident angle of a virtual environment light and a skin thickness value corresponding to a first skin fragment of the skin fragments;
determining (S220) a skin tone adjusting parameter based on the incident angle of the virtual environment light and the skin thickness value corresponding to the first skin fragment of the avatar (301, 302, 303, 402); and
adjusting (S230) a skin tone of the first skin fragment based on a default skin tone of the first skin fragment and the skin tone adjusting parameter of the first skin fragment before rendering the avatar (301, 302, 303, 402).

2. An avatar skin tone adjusting system, comprising:
a non-transitory memory (102), storing a program code;
a processor (104), coupled to the memory (102), and loading the program code to perform:
obtaining an incident angle of a virtual environment light and a skin thickness value corresponding to a first skin fragment of the skin fragments;
determining a skin tone adjusting parameter based on the incident angle of the virtual environment light and the skin thickness value corresponding to the first skin fragment of the avatar (301, 302, 303, 402); and
adjusting a skin tone of the first skin fragment based on a default skin tone of the first skin fragment and the skin tone adjusting parameter of the first skin fragment before rendering the avatar (301, 302, 303, 402).

3. The method according to claim 1, wherein the skin thickness value is a grayscale value, and the step of determining the skin tone adjusting parameter comprising:
mapping the incident angle as a light angle parameter;
obtaining a predetermined blood color and a blood color correction parameter;
determining the skin tone adjusting parameter based on the grayscale value, the light angle parameter, the predetermined blood color, and the blood color correction parameter, or the avatar skin tone adjusting system of claim 2, wherein the processor is configured to:
map the incident angle as a light angle parameter;
obtain a predetermined blood color and a blood color correction parameter;
determine the skin tone adjusting parameter based on the grayscale value, the light angle parameter, the predetermined blood color, and the blood color correction parameter.

4. The method according to claim 3, wherein the light angle parameter has a maximum value in response to the incident angle being 45 degrees, and the light angle parameter has a minimum value in response to the incident angle being 0 or 90 degrees, or the avatar skin tone adjusting system of claim 3, wherein the light angle parameter has a maximum value in response to the incident angle being 45 degrees, and the light angle parameter has a minimum value in response to the incident angle being 0 or 90 degrees.

5. The method according to claim 3, wherein the grayscale value is negatively related to the skin thickness value, or the avatar skin tone adjusting system of claim 3, wherein the grayscale value is negatively related to the skin thickness value.

6. The method according to claim 1, wherein the default skin tone comprises N first color components, the skin tone adjusting parameter comprises N second color components respectively corresponding to the N first color components, and the step of adjusting the skin tone of the first skin fragment comprising:
adding each of the first color components of the default skin tone to the corresponding second color component of the skin tone adjusting parameter, or the avatar skin tone adjusting system of claim 2, wherein the default skin tone comprises N first color components, the skin tone adjusting parameter comprises N second color components respectively corresponding to the N first color components, and the processor is configured to:
add each of the first color components of the default skin tone to the corresponding second color component of the skin tone adjusting parameter.

7. The method according to claim 1, further comprising:
obtaining an ambient occlusion value corresponding to the first skin fragment of the avatar (301, 302, 303, 402); and
modifying the adjusted skin tone of the first skin fragment based on the ambient occlusion value of the first skin fragment before rendering the avatar (301, 302, 303, 402), or the avatar skin tone adjusting system of claim 2, wherein the processor (104) is further configured to:
obtain an ambient occlusion value corresponding to the first skin fragment of the avatar (301, 302, 303, 402); and
modify the adjusted skin tone of the first skin fragment based on the ambient occlusion value of the first skin fragment before rendering the avatar (301, 302, 303, 402).

8. The method according to claim 1, further comprising:
obtaining a self-luminous value corresponding to the first skin fragment of the avatar (301, 302, 303, 402); and
modifying the adjusted skin tone of the first skin fragment based on the self-luminous value of the first skin fragment before rendering the avatar (301, 302, 303, 402), or the avatar skin tone adjusting system of claim 2, wherein the processor (104) is further configured to:
obtain a self-luminous value corresponding to the first skin fragment of the avatar (301, 302, 303, 402); and
modify the adjusted skin tone of the first skin fragment based on the self-luminous value of the first skin fragment before rendering the avatar (301, 302, 303, 402).

9. The method according to claim 1, further comprising:
obtaining an ambient occlusion value corresponding to the first skin fragment of the avatar (301, 302, 303, 402);
obtaining a self-luminous value corresponding to the first skin fragment of the avatar (301, 302, 303, 402); and
modifying the adjusted skin tone of the first skin fragment based on the ambient occlusion value and the self-luminous value of the first skin fragment before rendering the avatar (301, 302, 303, 402), or the avatar skin tone adjusting system of claim 2, wherein the processor (104) is further configured to:
obtain an ambient occlusion value corresponding to the first skin fragment of the avatar (301, 302, 303, 402);
obtain a self-luminous value corresponding to the first skin fragment of the avatar (301, 302, 303, 402); and
modify the adjusted skin tone of the first skin fragment based on the ambient occlusion value and the self-luminous value of the first skin fragment before rendering the avatar (301, 302, 303, 402).

10. The method according to claim 1, further comprising:
rendering the first skin fragment with the adjusted skin tone, or the avatar skin tone adjusting system of claim 2 wherein the processor (104) is further configured to:
render the first skin fragment with the adjusted skin tone.
